# EUROPEAN PATENT APPLICATION

(11) **EP 4 152 806 A1**
(43) Date of publication of application: **22.03.2023**
(21) Application number: 21821666.1
(22) Date of filing: 31.05.2021
(51) Int. Cl.: H04W 28/02, H04W 72/12

(54) **DATA TRANSMISSION METHOD AND APPARATUS**

(30) Priority: 12.06.2020 CN 202010535494
(71) Applicant: Huawei Technologies Co., Ltd., Longgang Shenzhen, Guangdong 518129 (CN)
(72) Inventor: HUANG, Qufang, Shenzhen, Guangdong 518129 (CN); WU, Kedi, Shenzhen, Guangdong 518129 (CN); LI, Nijun, Shenzhen, Guangdong 518129 (CN); WEI, Yuejun, Shenzhen, Guangdong 518129 (CN)
(74) Representative: Pfenning, Meinig & Partner mbB
(86) International application number: PCT/CN2021/097110
(87) International publication number: WO 2021/249218

(57) **Abstract**

This application provides a data transmission method and an apparatus. In the technical solutions of this application, a transmission priority of a data packet may be changed, so that the data packet has an opportunity to continue to be transmitted. Specifically, when the data packet just arrives at a PDCP layer of a communication apparatus, the priority of the data packet is a specific priority. If the data packet is not sent or is not successfully sent after a decoding moment of a receiver is exceeded, compared with a manner of directly discarding the data packet, in this manner, the priority of the data packet may be changed, so that the data packet has the opportunity to continue to be transmitted. This helps improve a compression rate and a decoding effect, to improve user experience.

## Description

This application claims priority to Chinese Patent Application No. 202010535494.9, filed with the China National Intellectual Property Administration on June 12, 2020 and entitled "DATA TRANSMISSION METHOD AND APPARATUS", which is incorporated herein by reference in its entirety.

### TECHNICAL FIELD

This application relates to the communication field, and more specifically, to a data transmission method and an apparatus.

### BACKGROUND

With continuous development of wireless communication technologies, a data transmission delay is continuously reduced, and a transmission capacity is increasingly large. Some applications with strong real-time performance and a high data capacity requirement, for example, large-scale real-world games and remote surgery, are gradually penetrated into the wireless communication technologies. Common features of these scenarios are strong interactivity, a large data volume, and a high real-time performance requirement. In these scenarios, a very large amount of data needs to be transmitted. Therefore, the original data is usually compressed before transmission. Usually, the data may be compressed in an inter-frame reference manner. When encoding data of an (N+1)^{th} frame, a sender refers to data of a frame before the (N+1)^{th} frame and encodes only a different part. When decoding the data of the (N+1)^{th} frame, a receiver also refers to the data of the frame before the (N+1)^{th} frame.

In a conventional transmission mode, after each data packet of an N^{th} frame arrives at a packet data convergence protocol (packet data convergence protocol, PDCP) layer of the sender, the sender starts a timer. When the timer expires, the sender infers that the receiver starts to decode data of the N^{th} frame. Therefore, the sender discards the data packet and no longer sends the data packet. In this way, a case in which the timer expires but transmission of some of data packets of the N^{th} frame is not completed may occur. If the sender knows that the data packet is not successfully received, the sender cannot refer to the N^{th} frame when compressing and encoding subsequent data. Instead, the sender can refer only to a video frame before the N^{th} frame. This reduces a compression rate. If the sender does not know that the data packet is not successfully received, the sender still refers to the N^{th} frame when compressing and encoding subsequent data. However, because the data packet is not successfully received, the receiver does not have complete information about the N^{th} frame, and this reduces a decoding effect.

### SUMMARY

This application provides a data transmission method and an apparatus, to help improve a compression rate and a decoding effect, so as to improve user experience.

According to a first aspect, this application provides a data transmission method. The method includes: A communication device starts a first timer when a first data packet arrives at a packet data convergence protocol PDCP layer of the communication device, where a priority of the first data packet is a first priority. The communication device starts a second timer when the first timer expires and the communication device does not send or does not successfully send the first data packet, where the priority of the first data packet is changed to a second priority.

In the foregoing technical solution, a transmission priority of a data packet may be changed, so that the data packet has an opportunity to continue to be transmitted. Specifically, when the data packet just arrives at a PDCP layer of a communication apparatus, the priority of the data packet is a specific priority. If the data packet is not sent or is not successfully sent after a decoding moment of a receiver is exceeded, compared with a manner of directly discarding the data packet, in this manner, the priority of the data packet may be changed, so that the data packet has the opportunity to continue to be transmitted. This helps improve a compression rate and a decoding effect, to improve user experience.

With reference to the first aspect, in a possible implementation, the second priority is lower than the first priority.

In this way, when the first timer expires, the communication device does not directly discard the first data packet, but reduces the transmission priority of the first data packet, so that the first data packet has an opportunity to continue to be transmitted. This helps improve a compression rate and a decoding effect, to improve user experience. In addition, after the first timer expires, when a new data packet arrives at the PDCP layer of the communication device, because a transmission priority of the new data packet is the first priority and is higher than the transmission priority of the first data packet, the new data packet is preferentially transmitted before the first data packet. Therefore, real-time performance of the new data packet is ensured.

With reference to the first aspect, in a possible implementation, the second priority is higher than the first priority.

For example, when the first data packet is very important for a receiver to decode data of a current frame or data of another subsequent frame, the communication device may increase the priority of the first data packet to ensure that the first data packet can be transmitted. This helps the receiver decode the data and improves user experience.

With reference to the first aspect, in a possible implementation, the method further includes: The communication device discards the first data packet when the second timer expires and the first data packet is not sent or is not successfully sent.

Considering that the first data packet may be useless for the receiver to decode data after a specific period of time, in the foregoing technical solution, after the second timer expires, the data packet that is not sent or not successfully sent is discarded. This helps avoid useless transmission and save transmission resources.

With reference to the first aspect, in a possible implementation, the method further includes: The communication device starts a third timer when the second timer expires and the first data packet is not sent or is not successfully sent, where the priority of the first data packet is changed to a third priority.

With reference to the first aspect, in a possible implementation, the communication device is a terminal, and the method further includes: The communication device sends a buffer status report BSR, where the BSR indicates a data volume corresponding to the first priority and a data volume corresponding to the second priority.

When the communication device is a terminal and has data to be sent, the terminal reports a buffer status report (buffer status report, BSR), to notify an access network device that the data needs to be sent and how much data needs to be sent. Because two timers and two priorities are configured in the terminal, data of a plurality of priorities may coexist in a buffer corresponding to one logical channel at a same moment. Therefore, the BSR reported by the terminal may indicate data volumes respectively corresponding to the plurality of priorities.

In an example, the BSR reported by the terminal may indicate a data volume corresponding to each priority.

For example, N priorities are configured in the terminal, and the BSR may indicate that a priority 1 corresponds to D1-bit (byte) data, a priority 2 corresponds to D2-bit data, ..., and a priority N corresponds to Dn-bit data.

In another example, the BSR reported by the terminal may alternatively indicate only data volumes corresponding to a part of priorities.

For example, N priorities are configured in the terminal, and a buffer corresponding to a logical channel 1 only includes data of a priority 1 and data of a priority 3. The BSR may indicate only that the priority 1 corresponds to D1-bit data and the priority 3 corresponds to D3-bit data, but does not need to indicate a data volume of another priority.

With reference to the first aspect, in a possible implementation, a first logical channel and a second logical channel are configured in the communication device, the first logical channel is a logical channel used to transmit the first data packet when the first data packet arrives at the PDCP layer of the communication device, and the second logical channel is an auxiliary logical channel of the first logical channel. The method further includes: The communication device moves the first data packet from the first logical channel to the second logical channel when the first timer expires and the first data packet is not sent or is not successfully sent.

When the first data packet enters the auxiliary logical channel, the communication device does not consider that new data arrives, and may not determine whether a BSR needs to be triggered. In this way, the communication device can determine, only when new data arrives on a primary logical channel, whether a BSR needs to be triggered, and the BSR can indicate only a data volume on the primary logical channel. The foregoing technical solution helps reduce complexity of buffer management.

With reference to the first aspect, in a possible implementation, when the first logical channel and the second logical channel correspond to a same PDCP entity, a PDCP sequence number SN of the first data packet on the first logical channel is the same as a PDCP SN of the first data packet on the second logical channel.

With reference to the first aspect, in a possible implementation, when the first logical channel and the second logical channel correspond to different PDCP entities, a PDCP SN of the first data packet on the second logical channel is a renumbered PDCP SN.

With reference to the first aspect, in a possible implementation, the communication device is a terminal, and the method further includes: The communication device receives first configuration information, where the first configuration information is used to configure the first logical channel and the second logical channel.

With reference to the first aspect, in a possible implementation, the communication device is a terminal, and the method further includes: The communication device sends a buffer status report BSR, where the BSR indicates a data volume corresponding to the first priority.

In the foregoing technical solution, the communication device indicates, in the BSR, only the data volume on the primary logical channel. This helps reduce the complexity of buffer management.

With reference to the first aspect, in a possible implementation, the communication device is a terminal, and the method further includes: The communication device receives second configuration information, where the second configuration information is used to configure the first timer, the second timer, the first priority, and the second priority for the communication device.

According to a second aspect, this application provides a data transmission method. The method includes: An access network device determines first configuration information, where the first configuration information is used to configure a first logical channel and a second logical channel, the first logical channel is a logical channel used to transmit a first data packet when the first data packet enters a PDCP layer of a terminal, and the second logical channel is an auxiliary logical channel of the first logical channel. The access network device sends the first configuration information to the terminal.

The second logical channel is a logical channel used to transmit a data packet that is not sent or not successfully sent on the first logical channel when a first timer expires. Data on the second logical channel may not trigger the terminal to report a BSR.

In the foregoing technical solution, the access network device configures a primary logical channel and the auxiliary logical channel for the terminal. When the first data packet enters the auxiliary logical channel, a communication device does not consider that new data arrives, and may not determine whether a BSR needs to be triggered. In this way, the communication device can determine, only when new data arrives on the primary logical channel, whether a BSR needs to be triggered, and the BSR can indicate only a data volume on the primary logical channel. This helps reduce complexity of buffer management.

With reference to the second aspect, in a possible implementation, the first logical channel and the second logical channel correspond to a same PDCP entity, and the method further includes: A PDCP layer of the access network device receives the first data packet sent by the terminal by using the second logical channel. The access network device delivers the first data packet in an out-of-order delivery manner.

In the foregoing technical solution, because the first logical channel and the second logical channel correspond to the same PDCP entity, when moving the data packet from the first logical channel to the second logical channel, the terminal may not change a PDCP SN of the data packet. Therefore, the access network device may deliver, in the out-of-order delivery manner, the data packet sent by the terminal by using the second logical channel.

With reference to the second aspect, in a possible implementation, the first logical channel and the second logical channel correspond to different PDCP entities, and the method further includes: A PDCP layer of the access network device receives the first data packet sent by the terminal by using the second logical channel. The access network device delivers the first data packet in an in-order delivery manner.

In the foregoing technical solution, because the first logical channel and the second logical channel correspond to the different PDCP entities, when moving the data packet from the first logical channel to the second logical channel, the terminal needs to renumber the data packet on the second logical channel. Therefore, the access network device may deliver, in the in-order delivery manner, the data packet sent by the terminal by using the second logical channel.

With reference to the second aspect, in a possible implementation, the method further includes: The access network device sends second configuration information to the terminal, where the second configuration information is used to configure the first timer, a second timer, a first priority, and a second priority for the terminal.

According to a third aspect, this application provides a data transmission apparatus. The apparatus includes a module configured to perform any one of the first aspect or the implementations of the first aspect.

In a possible implementation, the data transmission apparatus includes at least one processor. The processor is connected to a memory, and is configured to read and execute a software program stored in the memory, to implement the method according to any one of the first aspect or the implementations of the first aspect.

In a possible implementation, the data transmission apparatus further includes a transceiver.

In a possible implementation, the data transmission apparatus is a chip that may be used in a terminal.

In a possible implementation, the data transmission apparatus is a terminal.

According to a fourth aspect, this application provides a data transmission apparatus. The apparatus includes a module configured to perform any one of the second aspect or the implementations of the second aspect.

In a possible implementation, the data transmission apparatus includes at least one processor. The processor is connected to a memory, and is configured to read and execute a software program stored in the memory, to implement the method according to any one of the second aspect or the implementations of the second aspect.

In a possible implementation, the data transmission apparatus further includes a transceiver.

In a possible implementation, the data transmission apparatus is a chip that may be used in an access network device.

In a possible implementation, the data transmission apparatus is an access network device.

According to a fifth aspect, this application provides a computer program product. The computer program product includes computer instructions. When the computer instructions are executed, the method according to any one of the first aspect or the possible implementations of the first aspect is performed, or the method according to any one of the second aspect or the possible implementations of the second aspect is performed.

According to a sixth aspect, this application provides a computer-readable storage medium. The storage medium stores computer instructions. When the computer instructions are executed, the method according to any one of the first aspect or the possible implementations of the first aspect is performed, or the method according to any one of the second aspect or the possible implementations of the second aspect is performed.

It can be learned that in the foregoing aspects, a transmission priority of a data packet may be changed, so that the data packet has an opportunity to continue to be transmitted. Specifically, when the data packet just arrives at a PDCP layer of a communication apparatus, the priority of the data packet is a specific priority. If the data packet is not sent or is not successfully sent after a decoding moment of a receiver is exceeded, compared with a manner of directly discarding the data packet, in this manner, the priority of the data packet may be changed, so that the data packet has the opportunity to continue to be transmitted. This helps improve a compression rate and a decoding effect, to improve user experience.

### BRIEF DESCRIPTION OF DRAWINGS

FIG. 1 is a schematic diagram of an architecture of a communication system that may be applied in an embodiment of this application;
FIG. 2 shows a possible implementation of a communication system that may be applied in an embodiment of this application;
FIG. 3 is a schematic diagram of a data transmission mode;
FIG. 4 is a schematic flowchart of a data transmission method according to an embodiment of this application;
FIG. 5 shows an example of configuring logical channels;
FIG. 6 shows an example of a technical solution applied in an embodiment of this application;
FIG. 7 shows another example of a technical solution applied in an embodiment of this application;
FIG. 8 is a schematic diagram of a structure of a data transmission apparatus according to an embodiment of this application;
FIG. 9 is a schematic diagram of a structure of a data transmission apparatus according to another embodiment of this application;
FIG. 10 is a simplified schematic diagram of a structure of a terminal according to an embodiment of this application;
FIG. 11 is a schematic diagram of a structure of a data transmission apparatus according to another embodiment of this application;
FIG. 12 is a schematic diagram of a structure of a data transmission apparatus according to another embodiment of this application; and
FIG. 13 is a simplified schematic diagram of a structure of an access network device according to an embodiment of this application.

### DETAILED DESCRIPTION OF EMBODIMENTS

The following describes technical solutions of this application with reference to the accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system. A 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (Public Land Mobile Network, PLMN), a device-to-device (device-to-device, D2D) communication system, a machine-to-machine (machine-to-machine, M2M) communication system, an internet of things (Internet of Things, loT) communication system, or another communication system.

A terminal (terminal) in embodiments of this application may be an access terminal device, a subscriber unit, a subscriber station, a mobile station, a relay station, a remote station, a remote terminal, a mobile device, a user terminal (user terminal), user equipment (user equipment, UE), a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved public land mobile network (public land mobile network, PLMN), a terminal in a future internet of things, or the like. This is not limited in embodiments of this application.

By way of example, and not limitation, in embodiments of this application, the wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal may alternatively be a terminal in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

In addition, in embodiments of this application, the terminal may further include a sensor, for example, an intelligent printer, a train detector, or a gas station. Main functions of the terminal include collecting data (for some terminals), receiving control information and downlink data from a network device, sending an electromagnetic wave, and transmitting uplink data to the network device.

A network device in embodiments of this application may be any communication device that has a wireless transceiver function and that is configured to communicate with a terminal. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system such as an NR system, may be one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node.

In embodiments of this application, an example in which the network device is an access network device is used to describe the technical solutions of this application.

A server in embodiments of this application, also referred to as a servomotor, is a device that provides a computing service. The server needs to respond to a service request and process the service request. Therefore, usually, the server needs to have capabilities of bearing a service and assuring the service. The server includes a processor, a hard disk, a memory, a system bus, and the like. An architecture of the server is similar to an architecture of a general-purpose computer. However, because the server needs to provide highly reliable services, the server has high requirements on a processing capability, stability, reliability, security, scalability, manageability, and the like. In a network environment, the server is classified into a file server, a database server, an application server, a WEB server, and the like based on different service types provided by the server.

In embodiments of this application, the application server is used as an example to describe the technical solutions of this application.

In embodiments of this application, the terminal, the access device, or the server includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal, the network device, or the server, or a functional module that is in the terminal, the network device, or the server and that can invoke and execute the program.

In addition, aspects or features of this application may be implemented as a method, an apparatus, or a product using standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

In embodiments of this application, the access network device and the terminal may communicate with each other by using a licensed spectrum (licensed spectrum), may communicate with each other by using an unlicensed spectrum (unlicensed spectrum), or may communicate with each other by using both a licensed spectrum and an unlicensed spectrum. The access network device and the terminal may communicate with each other by using a spectrum below 6 gigahertz (gigahertz, GHz), may communicate with each other by using a spectrum above 6 GHz, or may communicate with each other by using both the spectrum below 6 GHz and the spectrum above 6 GHz. A spectrum resource used between the access network device and the terminal is not limited in embodiments of this application.

The access network device and the terminal in embodiments of this application may be deployed on land, where the deployment includes indoor or outdoor, or handheld or vehicle-mounted deployment, may be deployed on water, or may be deployed on an aerocraft, a balloon, and an artificial satellite in air. An application scenario of the access network device and the terminal is not limited in embodiments of this application.

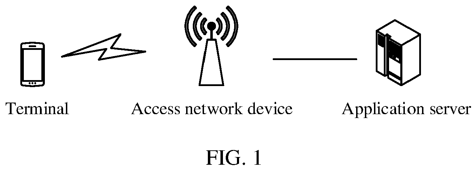

FIG. 1 is a schematic diagram of an architecture of a communication system that may be applied in an embodiment of this application. The communication system shown in FIG. 1 may include a terminal, an access network device, and an application server. The terminal may be connected to the access network device in a wireless manner, and the access network device may be connected to the application server in a wired manner. The terminal may be located at a fixed location, or may be mobile. It should be understood that FIG. 1 is merely a schematic diagram. The architecture of the communication system may further include other network devices, for example, may further include a gateway device, a wireless relay device, and a wireless backhaul device. Quantities of terminals, access network devices, and application servers included in the architecture of the communication system are not limited in this embodiment of this application.

For detailed descriptions of the terminal, the access network device, and the application server in FIG. 1, refer to the foregoing descriptions. Details are not described herein again.

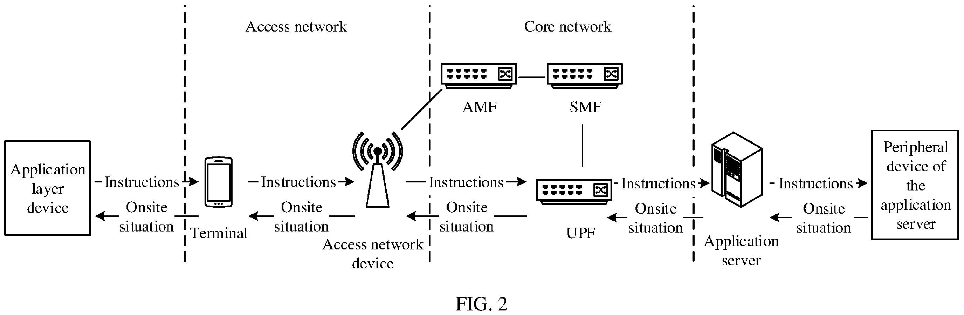

With continuous development of wireless communication technologies, a data transmission delay is continuously reduced, and a transmission capacity is increasingly large. Some applications with strong real-time performance and a high data capacity requirement, for example, large-scale real-world games and remote surgery, are gradually penetrated. Common features of data transmission in these scenarios are strong interactivity, a large data volume, and a high real-time performance requirement. FIG. 2 shows a possible implementation of a communication system that may be applied in an embodiment of this application. As shown in FIG. 2, a peripheral device (for example, a camera or an operation hand) of an application server may send onsite data that reflects an actual onsite situation to an application layer device (for example, a visual helmet) through a wireless communication system, and the application layer device may send an instruction used to control the peripheral device of the application server to the peripheral device of the application server through a wireless communication network, to remotely control the peripheral device of the application server. For a downlink direction: The peripheral device of the application server may transmit the onsite data to the application server. The application server transmits the onsite data to an access network device through core network devices such as a user plane function (user plane function, UPF), a session management function (session management function, SMF), and an access and mobility management function (access and mobility management function, AMF). The access network device transmits the onsite data to a terminal by using an air interface technology. The terminal sends the onsite data to the application layer device. For an uplink direction: The instruction of the application layer device may be sent to the terminal, and the terminal sends the instruction to the access network device by using the air interface technology. The access network device transmits the instruction to the application server through core network devices such as the AMF, the SMF, and the UPF. Then, the application server transmits the instruction to the peripheral device of the application server.

The following describes a technical problem to be resolved in this application by using remote surgery as an example.

The remote surgery is used as an example. The remote surgery is usually used for rescue in emergencies such as a case in which a doctor cannot arrive in time. In this scenario, an application layer device may be a visual helmet, control gloves, or the like, and a peripheral device of an application server may be a camera, a mechanical hand, or the like. The doctor may remotely observe a situation of a surgery site through devices such as the visual helmet and send corresponding instructions through devices such as the gloves. The instructions are transmitted through a wireless communication system to the surgery site and executed by the mechanical hand on the site. An execution situation may be converted into signals through the camera and another medical professional device and sent back to the helmet of the doctor.

In the remote surgery scenario, a large amount of video data needs to be transmitted, especially in a downlink direction. However, the video data usually requires high definition and a low delay. Therefore, the original video data is usually compressed before transmission.

Based on current 60 frames per second, there is an interval of 16.67 ms between two frames. Due to a natural feature of video services, the surgery site does not change greatly at an interval of 16.67 ms, and much content of several adjacent frames is the same. For this feature, a sender may usually compress the original video data in an inter-frame reference manner, to be specific, when encoding video data of an (N+1)^{th} frame, the sender refers to video data of a frame before the (N+1)^{th} frame, and encodes only a different part. When decoding the video data of the (N+1)^{th} frame, a receiver also refers to the video data of the frame before the (N+1)^{th} frame. For example, when encoding the video data of the (N+1)^{th} frame, the sender may refer to video data of an N^{th} frame, and encode only a different part. When decoding the video data of the (N+1)^{th} frame, the receiver may refer to the video data of the N^{th} frame.

For example, video data of each frame is compressed to form three data packets, and an interval between the N^{th} frame and the (N+1)^{th} frame is 16.6 ms.

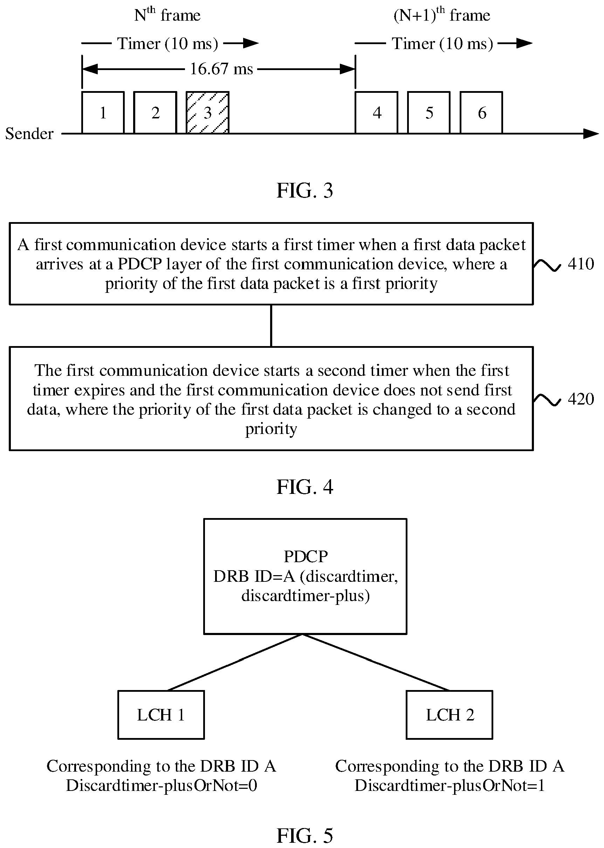

In a transmission mode, as shown in FIG. 3, after three data packets of the N^{th} frame arrive at a packet data convergence protocol (packet data convergence protocol, PDCP) layer of the sender, the sender starts three timers. The three data packets of the N^{th} frame enter a buffer and wait to be transmitted, where timing duration of the timer is 10 ms. When the timer expires, the sender discards a data packet that is not sent or is not successfully sent in the three data packets of the N^{th} frame. In FIG. 3, data packets 1, 2, and 3 are arranged side by side, indicating that the data packets 1, 2, and 3 are sent one by one through a wireless interface. It should be noted that a plurality of data packets of a same frame almost arrive at the PDCP layer at the same time, and a time difference is extremely small and can be ignored. To be specific, the data packets 1, 2, and 3 in FIG. 3 may be considered as arriving at a PDCP layer of a sender device at the same time, and each of the data packets 1, 2, and 3 corresponds to one timer. The three timers are started at the same time and also expire at the same time.

In the foregoing transmission mode, when the sender infers that the receiver starts to decode the video data of the N^{th} frame (for example, the sender considers that the receiver starts to decode the video data of the N^{th} frame 10 ms later), if the sender has not sent the data packet 3 or the data packet 3 has not been successfully sent at this time, the sender discards the data packet 3 and no longer transmits the data packet 3. When decoding the video data of the N^{th} frame, the receiver can decode only data packets 1 and 2. In addition, because the data packet is not successfully sent during a running period of the timer, if a video encoder of the sender knows that the data packet 3 is not successfully received, the sender cannot refer to the N^{th} frame when compressing and encoding subsequent video data. Instead, the sender can refer only to a video frame before the N^{th} frame. This reduces a compression rate. If the video encoder of the sender does not know that the data packet 3 is not successfully received, the sender still refers to the N^{th} frame when compressing and encoding subsequent video data. However, because the data packet 3 is not successfully received, the receiver does not have complete information about the N^{th} frame when performing decoding, and this reduces a decoding effect.

To resolve the foregoing problem, this application provides a data transmission method and an apparatus, to change a transmission priority of a data packet, so that the data packet has an opportunity to continue to be transmitted. Specifically, when the data packet just arrives at a PDCP layer of a communication apparatus, the priority of the data packet is a specific priority. If the data packet is not sent or is not successfully sent after a specific moment is exceeded (for example, a predefined decoding moment of a receiver is exceeded), compared with a manner of directly discarding the data packet, in this manner, the priority of the data packet may be changed in embodiments of this application, so that the data packet has the opportunity to continue to be transmitted. This helps improve a data compression rate and a decoding effect, to improve user experience.

FIG. 4 is a schematic flowchart of a data transmission method according to an embodiment of this application. A communication device in FIG. 4 corresponds to the foregoing sender, and may be a terminal or an access network device. When the communication device is a terminal, the method corresponds to uplink data transmission. When the communication device is an access network device, the method corresponds to downlink data transmission. The method shown in FIG. 4 includes at least a part of the following content.

In 410, the communication device starts a first timer when a first data packet arrives at a PDCP layer of the communication device. In this case, a priority of the first data packet is a first priority.

In 420, the communication device starts a second timer when the first timer expires and the communication device does not send or does not successfully send the first data packet, where the priority of the first data packet is changed to a second priority.

In this embodiment of this application, the communication device may be configured with a plurality of timers and a plurality of priorities. A quantity of timers and a quantity of priorities may be the same or may be different.

Optionally, the first timer may be configured for a data radio bearer (data radio bearer, DRB). Lasting period of the first timer may be configured by using higher layer signaling (for example, RRC signaling). For example, when the communication device is a terminal, the terminal receives RRC signaling from an access network device, where the RRC signaling includes a DRB configuration message, and the DRB configuration message carries indication information indicating duration, namely, the lasting period of the first timer. For example, when the communication device is an access network device, the access network device may determine duration of the first timer, and send the duration of the first timer to a terminal device by using RRC signaling. For example, the access network device may include, in a DRB configuration message in the RRC signaling, indication information indicating the duration, namely, the lasting period of the first timer. The access network device may determine the duration of the first timer based on a current service feature, for example, determine the duration of the first timer based on a delay budget (delay budget) in a quality of service (quality of service, QoS) parameter corresponding to a current service. This is not limited in this embodiment of this application. When the PDCP layer of the communication device receives the first data packet from an upper layer (for example, a service data adaptation protocol (service data adaptation protocol, SDAP) layer), the communication device starts the first timer. For example, once a service data unit (service data unit, SDU) is received from the upper layer, the communication device starts a first timer.

In this application, if the first data packet is not sent or is not successfully sent during a running period of the first timer, the communication device may start the second timer, and change the priority of the first data packet to the second priority. During a running period of the second timer, a data packet corresponding to the second timer may be transmitted. In addition, optionally, if the first data packet is successfully sent during the running period of the first timer, the PDCP layer of the communication device may discard the first data packet when the first data packet is successfully sent or when the first timer expires. For example, a PDCP status report indicates that an SDU corresponding to the first timer is successfully sent during the running period of the first timer, and a PDCP entity of the communication device may discard the SDU and a protocol data unit (protocol data unit, PDU) corresponding to the SDU. If the PDU corresponding to the SDU has been transmitted to a lower layer, the PDCP entity may indicate the lower layer to discard the PDU corresponding to the SDU.

Optionally, a configuration of the second timer is the same as that of the first timer, and the second timer may also be configured for the DRB. Lasting period of the second timer may be configured by using higher layer signaling.

When the communication device is configured with two timers and two priorities, if the first data packet is successfully sent during the running period of the second timer or the second timer expires, the PDCP entity of the communication device may discard the first data packet. For example, a PDCP status report indicates that an SDU corresponding to the second timer is successfully sent during the running period of the second timer, and the PDCP entity of the communication device may discard the SDU and a PDU corresponding to the SDU. If the PDU corresponding to the SDU has been transmitted to the lower layer, the PDCP entity may indicate the lower layer to discard the PDU corresponding to the SDU.

When the communication device is configured with more than two timers and more than two priorities, if the first data packet is not sent or is not successfully sent during the running period of the second timer, the communication device may start a third timer, and change the priority of the first data packet to a third priority. During a running period of the third timer, a data packet corresponding to the third timer may be transmitted. By analogy, the first data packet is discarded until transmission of the first data packet is completed or an N^{th} (where N is greater than or equal to 2) timer expires. Optionally, if the first data packet is successfully sent during the running period of the second timer, the PDCP entity of the communication device may discard the first data packet when the first data packet is successfully sent or when the second timer expires. For example, a PDCP status report indicates that an SDU corresponding to the second timer is successfully sent during the running period of the second timer, and the PDCP entity of the communication device may discard the SDU and a PDU corresponding to the SDU. If the PDU corresponding to the SDU has been transmitted to the lower layer, the PDCP entity may indicate the lower layer to discard the PDU corresponding to the SDU.

Timing duration of the first timer and timing duration of the second timer are not specifically limited in this embodiment of this application.

Optionally, the timing duration of the first timer may be configured based on a quality of service (quality of service, QoS) requirement of the to-be-transmitted service. For example, the timing duration of the first timer may be 10 ms.

Optionally, the timing duration of the second timer may be determined based on a playing time interval between a reference frame selected by an encoder and a current frame.

In this embodiment of this application, the first priority is different from the second priority.

In an example, the second priority is lower than the first priority. In this way, when the first timer expires, the communication device does not directly discard the first data packet, but reduces the transmission priority of the first data packet, so that the first data packet has an opportunity to continue to be transmitted. This helps improve a compression rate and a decoding effect, to improve user experience. In addition, after the first timer expires, when a new data packet arrives at the PDCP layer of the communication device, because a transmission priority of the new data packet is the first priority and is higher than the transmission priority of the first data packet, the new data packet is preferentially transmitted before the first data packet. Therefore, real-time performance of the new data packet is ensured.

In another example, the second priority is higher than the first priority. For example, when the first data packet is very important for a receiver to decode data of the current frame or data of another subsequent frame, the communication device may increase the priority of the first data packet to ensure that the first data packet can be transmitted. This helps the receiver decode the data and improves user experience.

An implementation of changing the priority of the first data packet is not specifically limited in this embodiment of this application.

Manner 1: A first logical channel used to transmit the first data packet when the first data packet arrives at the PDCP layer of the communication device includes or is configured with the first priority and the second priority. For example, when the first data packet arrives at the PDCP layer of the communication device, the first data packet is transmitted by using the first logical channel at the first priority. When the first timer expires and the first data packet is not transmitted or is not successfully transmitted, the first data packet is still transmitted by using the first logical channel, but the priority of the first data packet is adjusted to the second priority.

Manner 2: A first logical channel used to transmit the first data packet when the first data packet arrives at the PDCP layer of the communication device is of the first priority. For example, when the first data packet arrives at the PDCP layer of the communication device, the first data packet is transmitted by using the first logical channel at the first priority. When the first timer expires and the first data packet is not transmitted or is not successfully transmitted, the first data packet is transmitted by using a second logical channel, where a priority of the second logical channel is the second priority. In this case, the priority corresponding to the first data packet is the second priority. In other words, an auxiliary logical channel may be configured for the first logical channel (or referred to as a primary logical channel). When the first timer expires and the communication device does not send or does not successfully send the first data packet, in addition to starting the second timer and adjusting the priority of the first data packet to the second priority, the communication device may further move the first data packet on the first logical channel to the auxiliary logical channel.

In some embodiments, the communication device receives first configuration information and/or second configuration information. The first configuration information is used to configure the auxiliary logical channel for the primary logical channel, and the second configuration information is used to configure N timers and N priorities (where N is greater than or equal to 2) for the communication device.

Optionally, the first configuration information and/or the second configuration information may be carried in higher layer signaling, for example, RRC signaling. For example, the RRC signaling is an RRC reconfiguration message.

In correspondence to the manner 1, that the communication device is a terminal, and the access network device configures the first timer, the second timer, the first priority, and the second priority for the terminal is used as an example. A discardtimer-plus parameter may be added to a DRB field of the RRC reconfiguration message, and exist in parallel with an original discardtimer parameter. The discardtimer parameter corresponds to the first timer, and the discardtimer-plus parameter corresponds to the second timer. A priority (priority) parameter is added to a MAC-LogicChannelConfig field, and the priority parameter and an original priority parameter indicate the first priority and the second priority.

In correspondence to the manner 2, that the communication device is a terminal, and the access network device configures the first timer, the second timer, the first priority, and the second priority for the terminal is used as an example. A discardtimer-plus parameter may be added to a DRB field of the RRC reconfiguration message, and exist in parallel with an original discardtimer parameter. The discardtimer parameter corresponds to the first timer, and the discardtimer-plus parameter corresponds to the second timer. A discardtimer-plusOrNot parameter is added to a parameter corresponding to an RLC entity in an RLC list indicated by RLC-BearerToAddModList, and the discardtimer-plusOrNot parameter may be a Boolean parameter. If a value of discardtimer-plusOrNot is 0, it indicates that the logical channel corresponds to a normal data packet of the DRB. If a value of discardtimer-plusOrNot is 1, it indicates that the logical channel corresponds to a data packet transmitted after the first timer expires and the second timer is started.

FIG. 5 shows an example of configuring logical channels.

As shown in FIG. 5, discardtimer and discardtimer-plus are configured for a DRB ID A, a logical channel (logical channel, LCH) 1 is of a first priority and corresponds to the DRB ID A and discardtimer-plusOrNot=0, and an LCH 2 is of a second priority and corresponds to the DRB ID A and discardtimer-plusOrNot=1. In this way, a data packet transmitted when the discardtimer does not expire is transmitted on the LCH 1, and a data packet transmitted after the discardtimer expires is transmitted on the LCH 2.

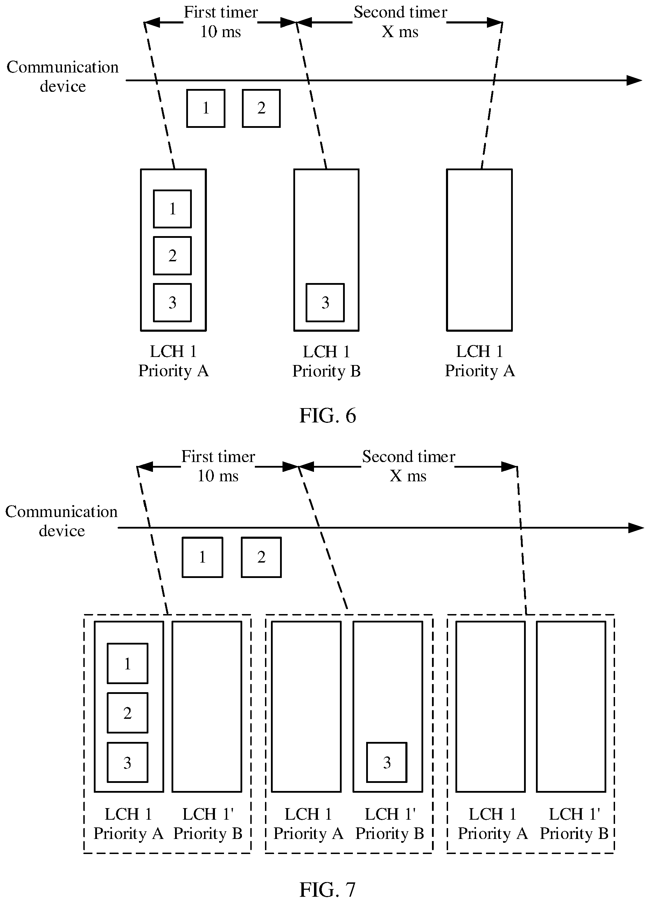

FIG. 6 shows an example of a technical solution applied in an embodiment of this application. In the example shown by FIG. 6, a first timer, a second timer, a priority A, and a priority B are configured in a communication device, where the priority A is higher than the priority B.

As shown in FIG. 6, data packets 1 to 3 arrive at a PDCP layer of the communication device, and are transmitted by using a logical channel 1. In this case, the communication device starts the first timer whose duration is 10 ms, and priorities of the data packets 1 to 3 are the priority A. During a running period of the first timer, the communication device successfully sends data packets 1 and 2. When the first timer expires, the communication device starts the second timer whose duration is several milliseconds, and changes a priority of the data packet 3 to the priority B. During a running period of the second timer, if there is a network resource that can be used to transmit the data packet 3, the communication device may send the data packet 3. For example, during the running period of the second timer, if a network capacity is sufficient, the communication device may send the data packet 3. For another example, during the running period of the second timer, if no new data packet arrives, the communication device may send the data packet 3. For still another example, during the running period of the second timer, if a new data packet arrives and the second timer does not expire yet after the new data packet is sent, the communication device may send the data packet 3.

When the communication device is a terminal and has data to be sent, the terminal reports a buffer status report (buffer status report, BSR), to notify the access network device that the data needs to be sent and how much data needs to be sent. Because a plurality of timers and a plurality of priorities are configured in the terminal, data of the plurality of priorities may coexist in a buffer corresponding to one LCH at a same moment.

For the foregoing case, in some embodiments, in correspondence to the manner 1, the BSR reported by the terminal may indicate data volumes respectively corresponding to the plurality of priorities.

In an example, the BSR reported by the terminal may indicate a data volume corresponding to each priority.

For example, the first logical channel is configured with the first priority and the second priority, the first priority is a priority of data that just enters a PDCP layer of the terminal, and a buffer corresponding to the first logical channel includes the data of the first priority. Regardless of whether the buffer corresponding to the first logical channel includes data of the second priority, the BSR indicates that the first priority corresponds to D1 -bit (byte) data and the second priority corresponds to D2-bit data.

In another example, the BSR reported by the terminal may alternatively indicate only data volumes corresponding to a part of priorities.

For example, the first logical channel is configured with the first priority, the second priority, and the third priority, and a buffer corresponding to the first logical channel includes only data of a priority 1 and data of a priority 3. In this case, the BSR may indicate only that the priority 1 corresponds to D1-bit data and the priority 3 corresponds to D3-bit data, but does not indicate a data volume of the second priority.

For another example, the first logical channel is configured with the first priority and the second priority, the first priority is a priority of data that just enters a PDCP layer of the terminal, and a buffer corresponding to the first logical channel includes the data of the first priority. Regardless of whether the buffer corresponding to the first logical channel includes data of the second priority, the BSR indicates only that the first priority corresponds to D1-bit data, but does not indicate a data volume corresponding to the second priority.

In some other embodiments, in correspondence to the manner 2, data on the auxiliary logical channel may not trigger the communication device to send a BSR. When the first data packet enters the auxiliary logical channel, the communication device does not consider that new data arrives, and may not determine whether a BSR needs to be triggered. In this way, the communication device can determine, only when new data arrives on the primary logical channel, whether a BSR needs to be triggered, and the BSR can indicate only a data volume on the primary logical channel. The foregoing technical solution helps reduce complexity of buffer management.

In a possible implementation, one auxiliary logical channel may be configured for each primary logical channel, and the auxiliary logical channel may correspond to data packets with one or more priorities.

For example, the communication device is configured with three timers and three priorities. If transmission of the first data packet is not completed when the first timer corresponding to the first data packet expires, the first data packet enters the auxiliary logical channel, and the priority for the first data packet is changed to the second priority. If transmission of the first data packet entering the auxiliary logical channel is not completed yet when the second timer corresponding to the first data packet expires, the priority for the first data packet is changed to the third priority. In addition, if transmission of a second data packet is not completed when the first timer corresponding to the second data packet expires, the second data packet enters the auxiliary logical channel, and a priority for the second data packet is changed to the second priority. In this way, the first data packet with the third priority and the second data packet with the second priority exist on the auxiliary logical channel.

In another possible implementation, a plurality of auxiliary logical channels may be configured for each primary logical channel, and each auxiliary logical channel may correspond to a data packet with one priority.

For example, the communication device is configured with three timers and three priorities, and each primary logical channel corresponds to two auxiliary logical channels. If transmission of the first data packet is not completed when the first timer corresponding to the first data packet expires, the first data packet enters a first auxiliary logical channel, and the priority for the first data packet is changed to the second priority. If transmission of the first data packet entering the first auxiliary logical channel is not completed yet when the second timer corresponding to the first data packet expires, the first data packet enters a second auxiliary logical channel, and the priority for the first data packet is changed to the third priority. In addition, if transmission of a second data packet is not completed when the first timer corresponding to the second data packet expires, the second data packet enters the first auxiliary logical channel, and a priority for the second data packet is changed to the second priority. In this way, the second data packet with the second priority exists on the first auxiliary logical channel, and the first data packet with the third priority exists on the second auxiliary logical channel.

In some embodiments, when the primary logical channel and auxiliary logical channels of the primary logical channel correspond to a same PDCP entity, a sequence number (sequence number, SN) (for example, a PDCP SN) of a data packet may not be changed when the data packet enters an auxiliary logical channel from the primary logical channel or enters another auxiliary logical channel from the auxiliary logical channel. When the communication device is a terminal, correspondingly, the access network device may process the data packet from the terminal in an in-order delivery manner.

In some other embodiments, when the primary logical channel and auxiliary logical channels of the primary logical channel correspond to different PDCP entities, an SN of a data packet needs to be changed when the data packet enters an auxiliary logical channel from the primary logical channel or enters another auxiliary logical channel from the auxiliary logical channel. When the communication device is a terminal, correspondingly, the access network device may process the data packet from the terminal in an out-of-order delivery manner.

FIG. 7 shows another example of a technical solution applied in an embodiment of this application. In the example shown by FIG. 7, a first timer, a second timer, a priority A, and a priority B are configured in a communication device, where the priority A is higher than the priority B, and a logical channel 1 and a logical channel 1' correspond to a same PDCP entity.

As shown in FIG. 7, data packets 1 to 3 arrive at a PDCP layer of the communication device, and are transmitted by using the logical channel 1. In this case, the communication device starts the first timer whose duration is 10 ms, and priorities of the data packets 1 to 3 are the priority A. During a running period of the first timer, the communication device successfully sends data packets 1 and 2. When the first timer expires, the communication device starts the second timer whose duration is several milliseconds, changes a priority of the data packet 3 to the priority B, and sends the data packet 3 by using the logical channel 1'. The logical channel 1' is an auxiliary logical channel of the logical channel. Because the logical channel 1 and the logical channel 1' correspond to the same PDCP entity, a PDCP SN of the data packet 3 on the logical channel 1' is still 3. During a running period of the second timer, if there is a network resource that can be used to transmit the data packet 3, the communication device may send the data packet 3 by using the logical channel 1'. For example, during the running period of the second timer, if a network capacity is sufficient, the communication device may send the data packet 3 by using the logical channel 1'. For another example, during the running period of the second timer, if no new data packet arrives, the communication device may send the data packet 3 by using the logical channel 1'. For another example, during the running period of the second timer, if a new data packet arrives and the second timer does not expire yet after the new data packet is sent, the communication device may send the data packet 3 by using the logical channel 1'.

It should be understood that if the logical channel 1 and the logical channel 1' correspond to different PDCP entities, the PDCP SN of the data packet 3 on the logical channel 1' is changed to 1.

In the foregoing embodiment, the second timer may be replaced by the first timer. In other words, when the first timer expires and the communication device does not send or does not successfully send the first data packet, the communication device restarts the first timer and changes the priority of the first data packet to the second priority. Similarly, when N timers are configured, similar functions may be implemented by restarting the first timer for N-1 times. Optionally, the access network device may configure at least two (that is, N-1) pieces of duration for the first timer, and each time the first timer is restarted, duration of the first timer may be changed.

Embodiments described in this specification may be independent solutions, or may be combined based on internal logic. All these solutions fall within the protection scope of this application.

It may be understood that in the foregoing method embodiment, a method and operation implemented by the terminal may alternatively be implemented by a component (for example, a chip or a circuit) that may be used in the terminal, a method and operation implemented by the access network device may alternatively be implemented by a component (for example, a chip or a circuit) that may be used in the access network device, and a method and operation implemented by the application server may alternatively be implemented by a component (for example, a chip or a circuit) that may be used in the application server.

The foregoing mainly describes the solutions provided in embodiments of this application from a perspective of interaction. It may be understood that, to implement the foregoing functions, each network element, for example, the terminal or the access network device, includes a corresponding hardware structure and/or software module for performing each function. A person skilled in the art may be aware that, in combination with units and algorithm steps of the examples described in the embodiments disclosed in this specification, this application can be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal or the access network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which each functional module is obtained through division based on each corresponding function is used below for description.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

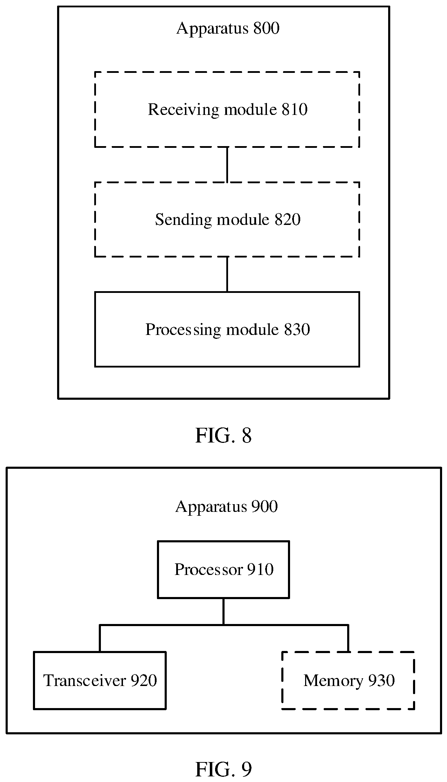

The method provided in embodiments of this application is described above in detail with reference to FIG. 4 to FIG. 7. Apparatuses provided in embodiments of this application are described below in detail with reference to FIG. 8 to FIG. 13. It should be understood that descriptions of apparatus embodiments correspond to the descriptions of the method embodiment. Therefore, for content that is not described in detail, refer to the foregoing method embodiment. For brevity, details are not described herein again.

FIG. 8 is a schematic diagram of a structure of a data transmission apparatus 800 according to an embodiment of this application. It should be understood that the apparatus 800 may correspond to the foregoing terminal or a chip in the terminal, and may have any function of the terminal in the method embodiment. The apparatus 800 includes a processing module 830.

The processing module 830 is configured to: start a first timer when a first data packet arrives at a packet data convergence protocol PDCP layer of the communication device, where a priority of the first data packet is a first priority; and start a second timer when the first timer expires and the communication device does not send or does not successfully send the first data packet, where the priority of the first data packet is changed to a second priority.

Optionally, the second priority is lower than the first priority.

Optionally, the processing module 830 is further configured to discard the first data packet when the second timer expires and the first data packet is not sent or is not successfully sent.

Optionally, the processing module 830 is further configured to start a third timer when the second timer expires and the first data packet is not sent or is not successfully sent, where the priority of the first data packet is changed to a third priority.

Optionally, the apparatus 800 is a terminal, and the apparatus 800 further includes a sending module 820. The sending module 820 is configured to send a buffer status report BSR, where the BSR indicates a data volume corresponding to the first priority and a data volume corresponding to the second priority.

Optionally, a first logical channel and a second logical channel are configured in the apparatus 800, the first logical channel is a logical channel used to transmit the first data packet when the first data packet arrives at the PDCP layer of the communication device, and the second logical channel is an auxiliary logical channel of the first logical channel. The processing module 830 is further configured to move the first data packet from the first logical channel to the second logical channel when the first timer expires and the first data packet is not sent or is not successfully sent.

Optionally, when the first logical channel and the second logical channel correspond to a same PDCP entity, a PDCP sequence number SN of the first data packet on the first logical channel is the same as a PDCP SN of the first data packet on the second logical channel.

Optionally, when the first logical channel and the second logical channel correspond to different PDCP entities, a PDCP SN of the first data packet on the second logical channel is a renumbered PDCP SN.

Optionally, the apparatus 800 is a terminal, and the apparatus 800 further includes a receiving module 810. The receiving module 810 is configured to receive first configuration information, where the first configuration information is used to configure the first logical channel and the second logical channel.

Optionally, the apparatus 800 is a terminal, and the apparatus 800 further includes a sending module 820. The sending module 820 is configured to send a buffer status report BSR, where the BSR indicates a data volume corresponding to the first priority.

Optionally, the apparatus 800 is a terminal, and the apparatus 800 further includes the receiving module 810. The receiving module 810 is configured to receive second configuration information, where the second configuration information is used to configure the first timer, the second timer, the first priority, and the second priority for the communication device.

For more detailed descriptions of the receiving module 810, the sending module 820, and the processing module 830, refer to related descriptions in the foregoing method embodiment. Details are not described herein again.

FIG. 9 shows a data transmission apparatus 900 according to an embodiment of this application. The apparatus 900 may be the terminal described above. The apparatus 900 may use a hardware architecture shown in FIG. 9. The apparatus 900 may include a processor 910 and a transceiver 920. Optionally, the apparatus 900 may further include a memory 930. The processor 910, the transceiver 920, and the memory 930 communicate with each other through an internal connection path. Related functions implemented by the processing module 830 in FIG. 8 may be implemented by the processor 910, and related functions implemented by the receiving module 810 and the sending module 820 may be implemented by the processor 910 by controlling the transceiver 920.

Optionally, the processor 910 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control the data transmission apparatus (for example, a base station, a terminal, or a chip), execute a software program, and process data of the software program.

Optionally, the processor 910 may include one or more processors, for example, include one or more central processing units (central processing units, CPUs). When the processor is one CPU, the CPU may be a single-core CPU, or may be a multi-core CPU.

The transceiver 920 is configured to send and receive data and/or a signal, and receive data and/or a signal. The transceiver may include a transmitter and a receiver. The transmitter is configured to send data and/or a signal, and the receiver is configured to receive data and/or a signal.

The memory 930 includes but is not limited to a random access memory (random access memory, RAM), a read-only memory (read-only memory, ROM), an erasable programmable memory (erasable programmable read-only memory, EPROM), and a compact disc read-only memory (compact disc read-only memory, CD-ROM). The memory 940 is configured to store related instructions and data.

The memory 930 is configured to store program code and data of the terminal, and may be a separate device or integrated into the processor 910.

Specifically, the processor 910 is configured to control the transceiver to perform information transmission with the terminal. For details, refer to the descriptions in the method embodiment. Details are not described herein again.

During specific implementation, in an embodiment, the apparatus 900 may further include an output device and an input device. The output device communicates with the processor 910, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 910, and may receive an input from a user in a plurality of manners. For example, the input device may be a mouse, a keyboard, a touchscreen device, or a sensor device.

It may be understood that FIG. 9 shows merely a simplified design of the data transmission apparatus. During actual application, the apparatus may further include other necessary components, including but not limited to any quantity of transceivers, processors, controllers, memories, and the like, and all terminals that can implement this application fall within the protection scope of this application.

In a possible design, the apparatus 900 may be a chip, for example, may be a communication chip that can be used in the terminal, and is configured to implement a related function of the processor 910 in the terminal. The chip may be a field programmable gate array, a dedicated integrated chip, a system chip, a central processing unit, a network processor, a digital signal processing circuit, or a microcontroller that implements the related function, or may be a programmable controller or another integrated chip. Optionally, the chip may include one or more memories, configured to store program code. When the code is executed, the processor is enabled to implement a corresponding function.

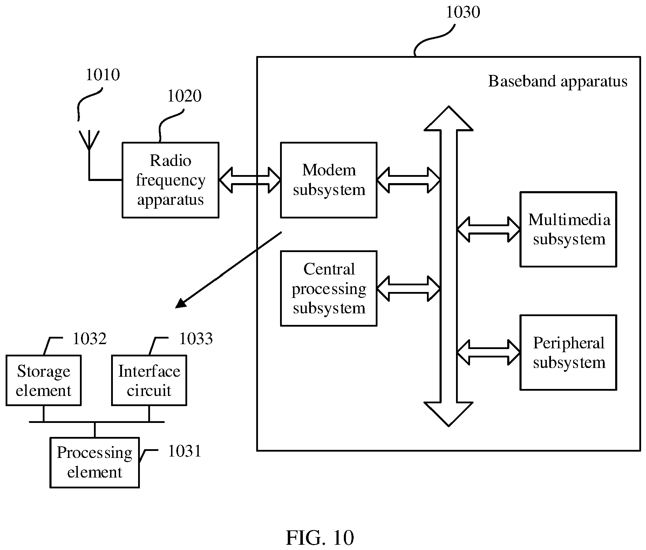

Optionally, when the apparatus in this embodiment is a terminal, FIG. 10 is a schematic diagram of a simplified structure of the terminal. For ease of understanding and illustration, in FIG. 10, a mobile phone is used as an example of the terminal. As shown in FIG. 10, the terminal includes an antenna 1010, a radio frequency part 1020, and a signal processing part 1030. The antenna 1010 is connected to the radio frequency part 1020. In a downlink direction, the radio frequency part 1020 receives, through the antenna 1010, information sent by an access network device, and sends, to the signal processing part 1030 for processing, the information sent by the access network device. In an uplink direction, the signal processing part 1030 processes information of the terminal, and sends the information to the radio frequency part 1020. The radio frequency part 1020 processes the information of the terminal, and then sends the processed information to the access network device through the antenna 1010.

The signal processing part 1030 may include a modem subsystem, configured to process data at each communication protocol layer. The signal processing part 1030 may further include a central processing subsystem, configured to implement processing of an operating system and an application layer of the terminal. In addition, the signal processing part 1030 may further include another subsystem, for example, a multimedia subsystem or a peripheral subsystem. The multimedia subsystem is configured to control a camera, a screen display, or the like of the terminal, and the peripheral subsystem is configured to implement a connection to another device. The modem subsystem may be a chip that is separately disposed. Optionally, the foregoing apparatus used in the terminal may be located in the modem subsystem.

The modem subsystem may include one or more processing elements 1031, for example, include a main control CPU and another integrated circuit. In addition, the modem subsystem may further include a storage element 1032 and an interface circuit 1033. The storage element 1032 is configured to store data and a program. However, a program used to perform the method performed by the terminal in the foregoing method may be not stored in the storage element 1032, but stored in a memory outside the modem subsystem. When the program is being used, the program is loaded to and used in the modem subsystem. The interface circuit 1033 is configured to communicate with another subsystem. The foregoing apparatus used in the terminal may be located in the modem subsystem. The modem subsystem may be implemented by using a chip. The chip includes at least one processing element and an interface circuit. The processing element is configured to perform the steps of any method performed by the terminal. The interface circuit is configured to communicate with another apparatus. In an implementation, units of the terminal that implement the steps in the foregoing method may be implemented in a form of scheduling a program by a processing element. For example, the apparatus used in the terminal includes a processing element and a storage element. The processing element invokes a program stored in the storage element, to perform the method performed by the terminal in the foregoing method embodiment. The storage element may be a storage element located on a same chip as the processing element, namely, an on-chip storage element.

In another implementation, a program used to perform the method performed by the terminal in the foregoing method may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiment.

In still another implementation, units of the terminal that implement the steps in the foregoing method may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units of the terminal that implement the steps in the foregoing method may be integrated together, and implemented in a form of a system-on-a-chip (system-on-a-chip, SoC). The SoC chip is configured to implement the foregoing method. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented by invoking a program by the processing element, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiment. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processing element. Certainly, some or all steps performed by the terminal may alternatively be performed by combining the first manner and the second manner.

As described above, the processing element herein may be a general-purpose processor, for example, a CPU, or may be one or more integrated circuits configured to implement the foregoing method, for example, one or more ASICs, one or more microprocessors DSPs, one or more FPGAs, or a combination of at least two of these types of integrated circuits.

The storage element may be one memory, or may be a general term of a plurality of storage elements.

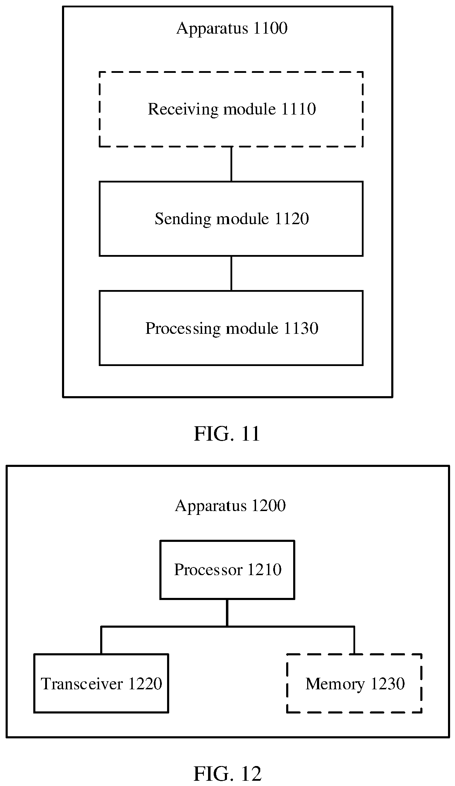

FIG. 11 is a schematic diagram of a structure of a data transmission apparatus 1100 according to an embodiment of this application. It should be understood that the apparatus 1100 may correspond to the foregoing access network device or a chip in the access network device, and may have any function of the access network device in the method embodiment. The apparatus 1100 includes a sending module 1120 and a processing module 1130.

The processing module 1130 is configured to determine first configuration information, where the first configuration information is used to configure a first logical channel and a second logical channel, the first logical channel is a logical channel used to transmit a first data packet when the first data packet enters a PDCP layer of a terminal, the second logical channel is an auxiliary logical channel of the first logical channel, and data on the second logical channel does not trigger the terminal to send a buffer status report BSR.

The sending module 1120 is configured to send the first configuration information to the terminal.

Optionally, the first logical channel and the second logical channel correspond to a same PDCP entity, and the apparatus 1100 further includes a receiving module 1110. The receiving module 1110 is configured to receive the first data packet sent by the terminal by using the second logical channel. The processing module 1130 is further configured to deliver the first data packet in an out-of-order delivery manner.

Optionally, the first logical channel and the second logical channel correspond to different PDCP entities, and the apparatus 1100 further includes a receiving module 1110. The receiving module 1110 is configured to receive the first data packet sent by the terminal by using the second logical channel. The processing module 1130 is further configured to deliver the first data packet in an in-order delivery manner.

Optionally, the sending module 1120 is further configured to send second configuration information to the terminal, where the second configuration information is used to configure a first timer, a second timer, a first priority, and a second priority for the terminal.

For more detailed descriptions of the receiving module 1110, the sending module 1120, and the processing module 1130, refer to related descriptions in the foregoing method embodiment. Details are not described herein again.

FIG. 12 shows a data transmission apparatus 1200 according to an embodiment of this application. The apparatus 1200 may be the access network device described above. The apparatus may use a hardware architecture shown in FIG. 12. The apparatus may include a processor 1210 and a transceiver 1220. Optionally, the apparatus may further include a memory 1230. The processor 1210, the transceiver 1220, and the memory 1230 communicate with each other through an internal connection path. Related functions implemented by the processing module 1130 in FIG. 11 may be implemented by the processor 1210, and related functions implemented by the receiving module 1110 and the sending module 1120 may be implemented by the processor 1210 by controlling the transceiver 1220.

Optionally, the processor 1210 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control the data transmission apparatus (for example, a base station, a terminal, or a chip), execute a software program, and process data of the software program.

Optionally, the processor 1210 may include one or more processors, for example, include one or more central processing units (central processing units, CPUs). When the processor is one CPU, the CPU may be a single-core CPU, or may be a multi-core CPU.

The transceiver 1220 is configured to send and receive data and/or a signal, and receive data and/or a signal. The transceiver may include a transmitter and a receiver. The transmitter is configured to send data and/or a signal, and the receiver is configured to receive data and/or a signal.

The memory 1230 includes but is not limited to a random access memory (random access memory, RAM), a read-only memory (read-only memory, ROM), an erasable programmable memory (erasable programmable read-only memory, EPROM), and a compact disc read-only memory (compact disc read-only memory, CD-ROM). The memory 1230 is configured to store related instructions and data.

The memory 1230 is configured to store program code and data of the access network device, and may be a separate device or integrated into the processor 1210.

Specifically, the processor 1210 is configured to control the transceiver to perform information transmission with a terminal. For details, refer to the descriptions in the method embodiment. Details are not described herein again.

During specific implementation, in an embodiment, the apparatus 1200 may further include an output device and an input device. The output device communicates with the processor 1210, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 1010, and may receive an input from a user in a plurality of manners. For example, the input device may be a mouse, a keyboard, a touchscreen device, or a sensor device.

It may be understood that FIG. 12 shows merely a simplified design of the data transmission apparatus. During actual application, the apparatus may further include other necessary components, including but not limited to any quantity of transceivers, processors, controllers, memories, and the like, and all access network devices that can implement this application fall within the protection scope of this application.

In a possible design, the apparatus 1200 may be a chip, for example, may be a communication chip that can be used in an access network device, and is configured to implement a related function of the processor 1210 in the access network device. The chip may be a field programmable gate array, a dedicated integrated chip, a system chip, a central processing unit, a network processor, a digital signal processing circuit, or a microcontroller that implements the related function, or may be a programmable controller or another integrated chip. Optionally, the chip may include one or more memories, configured to store program code. When the code is executed, the processor is enabled to implement a corresponding function.

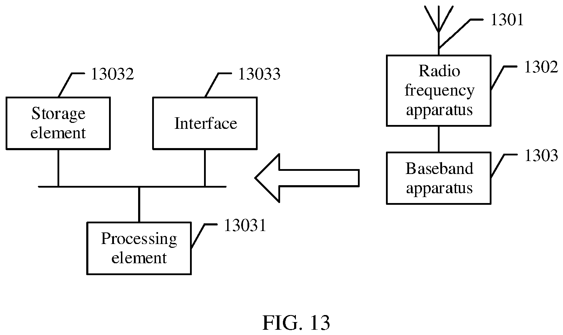

FIG. 13 is a simplified schematic diagram of a structure of an access network device according to an embodiment of this application. The access network device is configured to implement an operation of the access network device in the foregoing embodiments. As shown in FIG. 13, the access network device includes an antenna 1301, a radio frequency apparatus 1302, and a baseband apparatus 1303. The antenna 1301 is connected to the radio frequency apparatus 1302. In an uplink direction, the radio frequency apparatus 1302 receives, through the antenna 1301, information sent by a terminal, and sends, to the baseband apparatus 1303 for processing, the information sent by the terminal. In a downlink direction, the baseband apparatus 1303 processes information of the terminal, and sends the information to the radio frequency apparatus 1302. The radio frequency apparatus 1302 processes the information of the terminal, and then sends the processed information to the terminal through the antenna 1301.

The baseband apparatus 1303 may include one or more processing elements 13031, for example, include a main control CPU and another integrated circuit. In addition, the baseband apparatus 1303 may further include a storage element 13032 and an interface 13033. The storage element 13032 is configured to store a program and data. The interface 13033 is configured to exchange information with the radio frequency apparatus 1302, and the interface is, for example, a common public radio interface (common public radio interface, CPRI). The foregoing apparatus used in the access network device may be located in the baseband apparatus 1303. For example, the foregoing apparatus used in the access network device may be a chip in the baseband apparatus 1303. The chip includes at least one processing element and an interface circuit. The processing element is configured to perform the steps of any method performed by the access network device. The interface circuit is configured to communicate with another apparatus. In an implementation, units of the access network device that implement the steps in the foregoing method may be implemented in a form of scheduling a program by a processing element. For example, the apparatus used in the access network device includes a processing element and a storage element. The processing element invokes a program stored in the storage element, to perform the method performed by the access network device in the foregoing method embodiment. The storage element may be a storage element that is located on a same chip as the processing element, namely, an on-chip storage element, or may be a storage element that is located on a different chip from the processing element, namely, an off-chip storage element.

In another implementation, units of the access network device that implement the steps in the foregoing method may be configured as one or more processing elements. These processing elements are disposed in the baseband apparatus. The processing element herein may be an integrated circuit, for example, one or more ASICs, one or more DSPs, one or more FPGAs, or a combination of these types of integrated circuits. These integrated circuits may be integrated together to form a chip.

The units of the access network device that implement the steps in the foregoing method may be integrated together, and implemented in a form of a system-on-a-chip (system-on-a-chip, SoC). For example, the baseband apparatus includes the SoC chip, configured to implement the foregoing method. At least one processing element and a storage element may be integrated into the chip, and the processing element invokes a program stored in the storage element to implement the foregoing method performed by the access network device. Alternatively, at least one integrated circuit may be integrated into the chip, to implement the foregoing method performed by the access network device. Alternatively, with reference to the foregoing implementations, functions of some units may be implemented by invoking a program by the processing element, and functions of some units may be implemented by the integrated circuit.

It can be learned that the foregoing apparatus used in the access network device may include at least one processing element and an interface circuit. The at least one processing element is configured to perform any method performed by the access network device in the foregoing method embodiment. The processing element may perform some or all steps performed by the access network device in a first manner, that is, by invoking a program stored in the storage element; or may perform some or all steps performed by the access network device in a second manner, that is, by combining instructions and a hardware integrated logic circuit in the processing element. Certainly, some or all steps performed by the access network device may alternatively be performed by combining the first manner and the second manner.

As described above, the processing element herein may be a general-purpose processor, for example, a CPU, or may be one or more integrated circuits configured to implement the foregoing method, for example, one or more ASICs, one or more microprocessors DSPs, one or more FPGAs, or a combination of at least two of these types of integrated circuits.

The storage element may be one memory, or may be a general term of a plurality of storage elements.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It should be understood that, the processor may be an integrated circuit chip, and has a signal processing capability. In an implementation process, the steps in the foregoing method embodiment may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus random access memory (direct rambus RAM, DR RAM).

In this application, "at least one" refers to one or more, and "a plurality of refers to two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that "one embodiment" or "an embodiment" mentioned in the entire specification means that particular features, structures, or characteristics related to the embodiment are included in at least one embodiment of the present invention. Therefore, "in one embodiment" or "in an embodiment" that appears throughout the entire specification does not necessarily mean a same embodiment. In addition, these particular features, structures, or characteristics may be combined in one or more embodiments by using any appropriate manner. It should be understood that sequence numbers of the foregoing processes do not mean execution sequences in embodiments of the present invention. The execution sequences of the processes should be determined based on functions and internal logic of the processes, and should not be construed as any limitation on the implementation processes of embodiments of the present invention.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed on various computer-readable media that store various data structures. The components may communicate by using a local and/or remote process and according to, for example, a signal having one or more data packets (for example, data from two components interacting with another component in a local system, a distributed system, and/or across a network such as the internet interacting with other systems by using the signal).

It should be further understood that "first", "second", and various numerical symbols in this specification are merely used for distinguishing for ease of description, and are not intended to limit the scope of embodiments of this application.

A person of ordinary skill in the art may be aware that, in combination with units and algorithm steps of the examples described in the embodiments disclosed in this specification, this application can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
starting, by a communication device, a first timer when a first data packet arrives at a packet data convergence protocol PDCP layer of the communication device, wherein a priority of the first data packet is a first priority; and
starting, by the communication device, a second timer when the first timer expires and the communication device does not send or does not successfully send the first data packet, wherein the priority of the first data packet is changed to a second priority.

2. The method according to claim 1, wherein the second priority is lower than the first priority.

3. The method according to claim 1 or 2, wherein the method further comprises:
discarding, by the communication device, the first data packet when the second timer expires and the first data packet is not sent or is not successfully sent.

4. The method according to claim 1 or 2, wherein the method further comprises:
starting, by the communication device, a third timer when the second timer expires and the first data packet is not sent or is not successfully sent, wherein the priority of the first data packet is changed to a third priority.

5. The method according to any one of claims 1 to 4, wherein the communication device is a terminal, and the method further comprises:
sending, by the communication device, a buffer status report BSR, wherein the BSR indicates a data volume corresponding to the first priority and a data volume corresponding to the second priority.

6. The method according to any one of claims 1 to 4, wherein a first logical channel and a second logical channel are configured in the communication device, the first logical channel is a logical channel used to transmit the first data packet when the first data packet arrives at the PDCP layer of the communication device, and the second logical channel is an auxiliary logical channel of the first logical channel; and
the method further comprises:
moving, by the communication device, the first data packet from the first logical channel to the second logical channel when the first timer expires and the first data packet is not sent or is not successfully sent.

7. The method according to claim 6, wherein when the first logical channel and the second logical channel correspond to a same PDCP entity, a PDCP sequence number SN of the first data packet on the first logical channel is the same as a PDCP SN of the first data packet on the second logical channel.

8. The method according to claim 6, wherein when the first logical channel and the second logical channel correspond to different PDCP entities, a PDCP SN of the first data packet on the second logical channel is a renumbered PDCP SN.

9. The method according to any one of claims 6 to 8, wherein the communication device is a terminal, and the method further comprises:
receiving, by the communication device, first configuration information, wherein the first configuration information is used to configure the first logical channel and the second logical channel.

10. The method according to any one of claims 6 to 9, wherein the communication device is the terminal, and the method further comprises:
sending, by the communication device, a buffer status report BSR, wherein the BSR indicates a data volume corresponding to the first priority.

11. The method according to any one of claims 1 to 10, wherein the communication device is the terminal, and the method further comprises:
receiving, by the communication device, second configuration information, wherein the second configuration information is used to configure the first timer, the second timer, the first priority, and the second priority for the communication device.

12. A data transmission method, wherein the method comprises:
determining, by an access network device, first configuration information, wherein the first configuration information is used to configure a first logical channel and a second logical channel, the first logical channel is a logical channel used to transmit a first data packet when the first data packet enters a packet data convergence protocol PDCP layer of a terminal, the second logical channel is an auxiliary logical channel of the first logical channel, and data on the second logical channel does not trigger the terminal to send a buffer status report BSR; and
sending, by the access network device, the first configuration information to the terminal.

13. The method according to claim 12, wherein the first logical channel and the second logical channel correspond to a same PDCP entity, and the method further comprises:
receiving, by a PDCP layer of the access network device, the first data packet sent by the terminal by using the second logical channel; and
delivering, by the access network device, the first data packet in an out-of-order delivery manner.

14. The method according to claim 12, wherein the first logical channel and the second logical channel correspond to different PDCP entities, and the method further comprises:
receiving, by a PDCP layer of the access network device, the first data packet sent by the terminal by using the second logical channel; and
delivering, by the access network device, the first data packet in an in-order delivery manner.

15. The method according to any one of claims 12 to 14, wherein the method further comprises:
sending, by the access network device, second configuration information to the terminal, wherein the second configuration information is used to configure a first timer, a second timer, a first priority, and a second priority for the terminal.

16. A communication apparatus, comprising a module configured to implement the method according to any one of claims 1 to 11.

17. A communication apparatus, comprising a processor and an interface circuit, wherein the processor is configured to: communicate with another apparatus through the interface circuit, and perform the method according to any one of claims 1 to 11.

18. A communication apparatus, comprising a processor configured to invoke a program stored in a memory, to perform the method according to any one of claims 1 to 11.

19. A communication apparatus, comprising a module configured to implement the method according to any one of claims 12 to 15.

20. A communication apparatus, comprising a processor and an interface circuit, wherein the processor is configured to: communicate with another apparatus through the interface circuit, and perform the method according to any one of claims 12 to 15.

21. A communication apparatus, comprising a processor configured to invoke a program stored in a memory, to perform the method according to claim 11 or 12.

22. A terminal, comprising the apparatus according to any one of claims 16 to 18.

23. An access network device, comprising the apparatus according to any one of claims 19 to 21.

24. A computer-readable storage medium, wherein the computer-readable storage medium stores instructions; and when the instructions are run, the method according to any one of claims 1 to 11 is implemented, or the method according to any one of claims 12 to 15 is implemented.

25. A computer program product, wherein when the computer program product runs on a processor, the processor is enabled to perform the method according to any one of claims 1 to 11 or the method according to any one of claims 12 to 15.
